## Europäisches Patentamt

## European Patent Office

## Office européen des brevets

(11) Veröffentlichungsnummer: **0 117 529**
**A2**

(12) # EUROPÄISCHE PATENTANMELDUNG

(21) Anmeldenummer: **84101875.7**

(22) Anmeldetag: **23.02.84**

(51) Int. Cl.³: **C 02 F 9/00**, C 02 F 1/46,
C 02 F 1/56, D 21 C 9/12

(30) Priorität: **25.02.83 AT 671/83**

(43) Veröffentlichungstag der Anmeldung: **05.09.84**
**Patentblatt 84/36**

(84) Benannte Vertragsstaaten: **CH DE FR LI SE**

(71) Anmelder: **Becker, Dieter J., Dipl.-Chem., Hohenloher Ring 30, D-2087 Bönningstedt (DE)**

(72) Erfinder: **Becker, Dieter J., Dipl.-Chem., Hohenloher Ring 30, D-2087 Bönningstedt (DE)**

(74) Vertreter: **Schulmeyer, Karl-Heinz, Dr., Kieler Strasse 59a, D-2087 Hasloh (DE)**

(54) **Verfahren zur Reinigung von bei der Zellstoffherstellung, insbesondere bei der Chlorbleiche von Zellstoff, anfallenden Abwässern.**

(57) Vorliegende Erfindung betrifft ein Verfahren zur Reinigung von bei der Zellstoffherstellung anfallenden Abwässern, insbesondere solchen, die bei der Chlorbleiche anfallen. Nach der Befreiung des Abwassers von Feststoffteilchen wird das vorgereinigte Abwasser unter ständiger Bewegung einer anodischen Oxydationsbehandlung unter definierten Bedingungen unterworfen, wobei der pH-Wert des Abwassers auf 1 bis 6,5 gehalten wird. Danach wird das Abwasser in einer Flockungszone mit einer wässrigen Lösung eines stark kationischen Polyelektrolyten behandelt, wobei Kolloide und suspendierte Inhaltsstoffe ausgeflockt werden. Nach Abtrennung der ausgeflockten Produkte und Neutralisieren wird das Abwasser in einer Belebtschlammanlage biologisch abgebaut und dann in einen Vorfluter abgeleitet.

**DR. KARL-HEINZ SCHULMEYER**
PATENTANWALT

ZUGELASSEN BEIM EUROPÄISCHEN PATENTAMT
EUROPEAN PATENT ATTORNEY
MANDATAIRE EN BREVETS EUROPÉENS

0117529

D-2087 HASLOH BEI HAMBURG
KIELER STRASSE 59 a
TELEFON (0 41 06) 6 64 93
TELEX 21 64 213 watc d

Dipl.-Chemiker
Dieter J. Becker

2087 Bönningstedt          Prio.: 25.Februar 1983
                          Österreich A 671/83
                          (1006 SY)


                          Februar 1984



### Verfahren zur Reinigung von bei der Zellstoffherstellung, insbesondere bei der Chlorbleiche von Zellstoff, anfallenden Abwässern

---


Die Erfindung betrifft ein Verfahren zur Reinigung
von bei der Zellstoffherstellung, insbesondere bei der
Chlorbleiche von Zellstoff, anfallenden Abwässern.

Bei der Zellstoffherstellung werden bekanntlich große
Mengen an Wasser gebraucht, so daß infolgedessen auch
im Verlauf des Fabrikationsprozesses große Mengen an
Abwasser anfallen, die infolge des Gehalts an mannigfachen festen, kolloidalen oder echt gelösten Produkten
nicht ungereinigt in die Umwelt abgelassen werden können.

Wegen des Gehalts an zahlreichen umweltbelastenden Stoffen sind zudem die gesetzlichen Bestimmungen bezüglich der Abwasserreinigung in letzter Zeit verschärft worden, und die Einhaltung dieser Vorschriften stellt insbesondere die Zellstoff-, Papier- und Kartonhersteller vor immer neue schwierige technische und wirtschaftliche Probleme.

Das bei der Zellstoff- und Papierherstellung anfallende Abwasser enthält große Mengen an aus dem Holzrohprodukt herausgelösten organischen Produkten, insbesondere Lignin oder Hemicellulosen, die zum großen Teil als kolloidale oder echte Lösung in dem Abwasser vorliegen. Ein besonderes Problem stellen die aus der Zellstoffbleicherei kommenden Abwässer dar, weil sie einen beträchtlichen Gehalt an bei der Bleicherei verwendeten Chemikalien bzw. deren Umsetzungsprodukten enthalten, die wegen ihrer Toxizität außerordentlich umweltbelastend wirken. Besonders bedenklich ist der Gehalt an Stoffen mit mutagenen Eigenschaften in den Abwässern der Zellstoffchlorierung, wie in jüngerer Zeit festgestellt wurde, siehe L. Stockman, L. Strömberg, F. De Sousa, Cellulose Chem. Technology 14 (1980), Seiten 517 - 526. Danach wirken Verbindungen wie 1,3-Dichloraceton, Monochloracetaldehyd, Trichlorethylen, 2-(3-)-Chlorpropanol, Chloroform und Tetrachlorkohlenstoff, die in solchen Abwässern enthalten sind, als aktive mutagene Stoffe. Beispielsweise wurden in einem Abwasser 1 bis 5 mg/l Chloroform gefunden, was einer Menge von 40 bis 200 g Chloroform pro Tonne Zellstoff entspricht. Obwohl einige dieser Verbindungen relativ instabil sind, gibt es jedoch auch andere, die über einen längeren Zeitraum unter Normalbedingungen relativ stabil bleiben. Eine rasche und wirksame Methode, diese Verbindungen unwirksam zu machen, erscheint daher im Rahmen der Reinigung solcher Abwässer sehr wünschenswert.

Die bisher angewandten Verfahren zur Reinigung bzw. Beseitigung der bei der Zellstoffherstellung und insbesondere bei der Chlorbleiche des Zellstoffs anfallenden großen Abwassermengen sind meist ziemlich zeit- und kostenaufwendig und führen noch nicht zu den gewünschten zufriedenstellenden Ergebnissen hinsichtlich von die Umwelt möglichst wenig belastenden Abwässern.

In der Praxis werden die aus der Zellstoffherstellung und der Chlorbleiche von Zellstoffen anfallenden Abwässer häufig eingedampft und die Rückstände anschließend verbrannt. Abgesehen von dem beim Eindampfen aufzubringenden hohen Energieaufwand werden beim Verbrennen der Rückstände die hohen Halogenanteile aus den Bleichereiabwässern freigesetzt, was zu einer starken Umweltbelastung führt und daher sehr unbefriedigend ist.

Man hat bereits nach anderen Möglichkeiten zur Lösung der anstehenden Abwasserprobleme gesucht, beispielsweise durch Ultrafiltration oder durch Adsorptionsverfahren. Es hat sich jedoch gezeigt, daß diese bekannten Verfahren in der Regel nicht geeignet sind, im Dauerbetrieb die mit einer hohen Schmutzfracht beladenen Abwässer in dem erforderlichen

0117529

Maße zu reinigen, so daß sie unbedenklich in den Wasserkreislauf zurückgeführt werden können. Insbesondere hat
sich gezeigt, daß die derart vorbehandelten Abwässer nicht
einer biologischen Reinigung zugeführt werden können,da
sie noch Chemikalien aus der Bleiche enthalten, die die
Mikroorganismen in einer biologischen Belebtschlammanlage
schädigen und das Verfahren dadurch stark beeinträchtigen
würden.Solche Verfahren haben sich daher in der Zellstoff-,
Papier- und Kartonindustrie nicht durchsetzen können.

Der vorliegenden Erfindung liegt nunmehr die Aufgabe zugrunde, ein Verfahren zur Reinigung von in der Zellstoff-,
Papier- und Kartonindustrie anfallenden Abwässern, insbesondere auch von Abwässern aus Zellstoffbleichereien,
zu schaffen, bei dem die vorstehend beschriebenen Nachteile
ganz oder weitgehend vermieden werden, die insbesondere
im Hinblick auf die Umweltbelastung besonders problematischen Inhaltsstoffe und Chemikalien in einer technisch und
wirtschaftlich befriedigenden Weise unschädlich gemacht
werden und das Abwasser in einer Endreinigungsstufe einer
biologischen Reinigung unterzogen werden kann, ohne daß die
Gefahr besteht, daß die hierzu verwendeten Mikroorganismen
geschädigt und die Belebtschlammanlage in ihrer Arbeitsweise merklich beeinträchtigt oder gar zerstört wird.

Die Aufgabe wird erfindungsgemäß gelöst durch ein Verfahren
zur Reinigung von bei der Zellstoffherstellung, insbesondere bei der Chlorbleiche von Zellstoff, anfallenden
Abwässern, das gekennzeichnet ist durch die Kombination
folgender Verfahrensstufen und -maßnahmen:

a) Befreiung des Abwassers von Feststoffteilchen in einer vorgeschalteten, mechanischen Reinigungsstufe,

b) Einführen des vorgereinigten Abwassers in eine Elektrolyseanlage, in der das Abwasser unter ständiger Bewegung einer anodischen Oxydationsbehandlung unterworfen wird, wobei eine elektrische Potentialdifferenz zwischen den Elektroden angelegt und der pH-Wert des Abwassers auf ungefähr 1 bis 6,5 in geeigneter Weise eingestellt und aufrechterhalten wird,

c) Überführen des so behandelten Abwassers aus Stufe b) in eine Flockungszone, in der unter ständiger Bewegung zu dem Abwasser eine wässrige Lösung eines stark kationischen Polyelektrolyten bei Raumtemperatur zugefügt und der pH-Wert auf 1 bis 6,5 eingestellt und aufrechterhalten wird, wobei eine Ausflockung von Kolloiden und suspendierten Inhaltsstoffen erfolgt,

d) Überführen des so behandelten Abwassers zusammen mit den ausgeflockten Produkten aus Stufe c) in eine weitere Zone, in der die ausgeflockten Produkte abgetrennt werden,

e) Neutralisieren des von den ausgeflockten Produkten befreiten Abwassers und

f) Überführen des neutralisierten Abwassers in eine Belebtschlammanlage, in der durch geeignete Mikroorganismen unter Beifügung von Zusatznährstoffen ein biologischer Abbau der noch im Abwasser vorhandenen organischen Produkte erfolgt, worauf das so geklärte Abwasser in einen Vorfluter abgeleitet wird.

Mit Hilfe dieser erfindungsgemäßen Kombination von aufeinander abgestimmten Verfahrensstufen und Verfahrensmaßnahmen gelingt es, auch solche Abwässer aus der Zellstoff-, Papier- und Kartonfabrikation unter wirtschaftlich befriedigenden Bedingungen zu reinigen, die bisher in bezug auf die Umweltbelastung als besonders problematisch gelten, so daß nach dem Durchlaufen der erfindungsgemäß vorgesehenen Kombination von Verfahrensstufen ein Abwasser erhalten wird, das unbedenklich in den allgemeinen Wasserkreislauf, beispielsweise über Vorfluter in Flüsse und Seen, abgelassen werden kann.

Das aus der Zellstoff-Fabrikation anfallende Abwasser und/oder das Abwasser aus der Chlorbleiche von Zellstoffen enthält außer den gelösten Produkten und suspendierten Feinteilchen in der Regel auch einen Anteil an gröberen Feststoffteilchen, der in einer mechanischen Vorreinigungsstufe, meist in Form von ein oder mehreren Absetzbecken, getrennt wird. Je nachdem, aus welchem Teil der Zellstoff-Fabrikation das Abwasser stammt, kann es alkalisch oder sauer sein. Diese Abwasserströme werden zweckmäßigerweise zusammengeführt, wobei in der Regel die Menge an saurem Abwasser diejenige an alkalischem Abwasser übersteigt, so daß der vereinigte Abwasserstrom in der Regel einen pH-Wert im Bereich von 2 bis 5 aufweist. In jedem Fall werden die vereinigten Abwässer vor, während oder nach der mechanischen Vorreinigung erforderlichenfalls auf einen pH-Wert im Bereich von 1 bis 6,5 eingestellt.

Das von gröberen Feststoffteilchen befreite Abwasser weist im allgemeinen eine Temperatur von ca. 20 bis 40 °C auf und wird in eine Elektrolyseanlage geleitet, in der es unter ständigem Bewegen, z. B. durch geeignete Rührvorrichtungen, einer anodischen Oxidationsbehandlung unterzogen wird. Die Elektrolyseanlage besteht zweckmäßigerweise aus einer Reihe von Plattenelektroden und aus einem Material, das gegenüber Halogenen bzw. Halogeniden, insbesondere gegenüber Chlor bzw. Chloriden, widerstandsfähig und sehr korrosionsfest ist. Solche Materialien sind dem Fachmann bekannt. Besonders bewährt haben sich Plattenelektroden aus austenitischem rostbeständigem Stahl (AVESTA 254 SMO) und aus Titan oder aus Titanlegierungen (z. B. ATi 24 Pd) sowie aus Kohlenstoff. Diese Elektroden können in Reihe oder parallel geschaltet werden.

Um einen möglichst guten Kontakt des Abwassers mit den Elektrodenplatten zu gewährleisten, werden vorzugsweise in einem Elektrolysebehälter die Plattenelektrodenpaare versetzt gegeneinander angeordnet, so daß der Abwasserstrom jeweils nach Passieren eines Elektrodenpaares seine Strömungsrichtung zu ändern gezwungen wird. Die Anzahl der aufeinanderfolgenden Elektrodenpaare richtet sich nach der Menge und Belastung des Abwassers, das in einer Zeiteinheit die Elektrolyseanlage passieren soll.

Während der Abwasserstrom die Elektrolyseanlage durchströmt, ist zwischen den Elektroden eine geeignete elektrische Potentialdifferenz angelegt. In der Regel wird mit einer Gleichstromquelle von 3 bis 24 V und 15 bis 50 A bei einer Temperatur des Abwasserstromes von 10 bis 40 $^{o}$C gearbeitet. Der pH-Wert des Abwassers soll im Bereich von 1 bis 6,5, vorzugsweise von 1,5 bis 4, liegen und kann ggf. in an sich bekannter Weise auf einen pH-Wert in diesem Bereich eingestellt und gehalten werden.

Während der Abwasserstrom kontinuierlich durch die Elektrolyseanlage geführt wird und dabei die einzelnen Elektrodenpaare passiert, findet an der Anode eine Oxydation der organischen Inhaltsstoffe unter gleichzeitiger Freisetzung von Chlor aus den chlorierten organischen Verbindungen statt. Hierbei werden insbesondere auch die mutagen wirkenden Verbindungen aus den Bleichereiablaugen durch Oxydation inaktiviert und vorhandene biotoxische Substanzen oxydativ gespaltet. Durch die Elektrolysebehandlung unter den angegebenen Bedingungen werden demnach Stoffe unschädlich gemacht, die bislang eine kostengünstige biologische Reinigung durch Zerstörung der Mikroorganismen vereitelten. Das freigesetzte Chlor wird in den Bleichprozeß zurückgeführt, wodurch das Verfahren noch wirtschaftlicher wird.

Die Abmessungen der Elektrolysenanlage und die Höhe der Strömungsgeschwindigkeit des zu behandelnden Abwassers werden so gewählt, daß die mittlere Verweilzeit des kontinuierlich durch die Elektrolyseanlage strömenden Abwassers ca. 15 Minuten bis 1 Stunde, vorzugsweise 20 bis 40 Minuten, beträgt. Die in dieser Zeit ablaufende anodische Oxydation reicht aus, um den größten Teil der biotoxischen und mutagenen Stoffe, insbesondere aus den Bleichereiabwässern, in unschädliche Stoffe zu oxydieren bzw. zu spalten, so daß sie die in einer späteren Stufe vorgesehene biologische Reinigung des Abwassers nicht mehr beeinträchtigen oder verhindern können.

Im Anschluß an die Elektrolysebehandlung wird das Abwasser in eine Flockungszone überführt, in der es unter ständiger Bewegung mit Hilfe geeigneter Rührvorrichtungen bei Raumtemperatur mit einem stark kationischen Polyelektrolyten versetzt wird. Als geeignete Polyelektrolyte haben sich z. B. Polyethylenimine bewährt (beispielsweise das im Handel befindliche SEDIPUR (CL 930)). Der Polyelektrolyt wird in einer 0,05 bis 1 gew.%igen wässrigen Lösung, vorzugsweise in einer 0,1 bis 0,2 gew.%igen wässrigen Lösung, zugesetzt, wobei der pH-Wert des Abwassers im Bereich von 1 bis 6,5, vorzugsweise von 1,5 bis 4, liegen soll. Beim Vermischen der Polyelektrolyte mit dem Abwasser tritt die gewünschte Ausflockung von Kolloiden und suspendierten Inhaltsstoffen ein, wobei durch intermittierendes kräftiges Rühren die zunächst gebildeten Mikroflocken zu besser abzutrennenden Makroflocken aggregieren.

Die Abtrennung der ausgeflockten Produkte erfolgt in einer weiteren Zone, wobei jedes geeignete Mittel zur Abtrennung angewendet werden kann. Im einfachsten Fall wird man mit einer großtechnischen Filtrationsanlage auskommen, vorzugsweise erfolgt die Abtrennung jedoch durch Flotation oder durch Sedimentation, ggf. unter Anwendung von Zentrifugalkräften. Die hierzu erforderlichen Vorrichtungen und Maßnahmen sind dem Fachmann bekannt und bedürfen daher keiner weiteren Erläuterung.

Das von den ausgeflockten Produkten befreite Abwasser wird nunmehr neutralisiert, wobei als Neutralisationsmittel z. B. Natronlauge oder Kalk in der erforderlichen Menge zugesetzt wird. Das neutralisierte Abwasser wird, ggf. nach einer zwischengeschalteten Filtration, in eine biologische Belebtschlammanlage überführt, in der die noch im Abwasser vorhandenen organischen Produkte weitgehend durch Mikroorganismen biologisch abgebaut werden, wobei man zweckmäßigerweise dem Abwasser Zusatznährstoffe (z. B. stickstoff- und phosphorhaltige Verbindungen) beifügt, um das Wachstum und die Wirksamkeit der Mikroorganismen günstig zu beeinflussen. Die Bedingungen, unter denen eine biologische Abwasserreinigung in einer Belebtschlammanlage durchgeführt wird, sind dem Fachmann bekannt und brauchen daher nicht näher ausgeführt zu werden.

Nach genügendem biologischem Abbau wird die Reinigung des Abwassers in der Belebtschlammanlage beendet. Das so geklärte Abwasser befindet sich in einem so gut gereinigten Zustand, daß es unbedenklich über einen Vorfluter der Kanalisation und von dort dem allgemeinen Wasserkreislauf wieder zugeführt werden kann. Die mittlere Verweilzeit in der Belebtschlammanlage beträgt in der Regel 24 Stunden.

Die Erfindung wird anhand eines Beispiels weiter erläutert.

Beispiel

Ein Rohabwasser aus der Chlorierungsstufe einer Sulfitzellstoff-Bleicherei mit einem pH-Wert von 1,8, einer Temperatur von 28 $^\circ$C, einem CSB-Wert von 4200 mg $O_2$/l und
einem Chloridgehalt von 2000 mg/l wurde zunächst in einem
Absetzbecken von gröberen Feststoffteilchen befreit und
dann das so vorgereinigte Rohabwasser in einen länglichen
10-Liter-Kessel eingeleitet, der mit einer Rührvorrichtung versehen war und als Elektrolyseanlage mit 5 Elektrodenpaaren ausgerüstet war. Diese waren jeweils seitlich nach rechts oder links wechselseitig versetzt angeordnet. An die Elektrodenpaare wurde eine Potentialdifferenz
angelegt unter Verwendung einer Gleichstromquelle von etwa
15 V und 45 A. Als Elektroden wurden Plattenelektroden aus
Titan (ATi 25 Pd) mit einem maximalen Gehalt an 0,05 %
Eisen, 0,10 % Sauerstoff, 0,03 % Stickstoff, 0,05 % Kohlenstoff und 0,012 % Wasserstoff eingesetzt. Das zu behandelnde
Abwasser strömte unter ständigem Rühren kontinuierlich mit
einer Geschwindigkeit durch die Elektrolyseanlage, die einer
mittleren Verweilzeit von 35 Minuten entsprach.

Das nach der Elektrolysebehandlung erhaltene Abwasser
besaß einen CSB-Wert von nur noch 1700 mg $O_2$/l und einen
deutlich niedrigeren Chloridgehalt von 1200 mg/l.

Mit einer Temperatur von ca. 20 $^\circ$C und einem pH-Wert von
2,5 wurde das Abwasser in einen weiteren Kessel eingeführt,
in dem es ebenfalls unter ständigem Rühren mit einer
0,2 %igen wässrigen Polyethyleniminlösung (Molekulargewicht 1 bis 2 Millionen) als stark kationischem Polyelektrolyten versetzt wurde.

Beim Vermischen erfolgte eine Ausflockung von Kolloiden und suspendierten Anteilen des Abwassers.

Die Abtrennung der ausgeflockten Produkte erfolgte in an sich bekannter Weise durch Flotation und Filtration. Das filtrierte saure Abwasser wurde mit Natronlauge neutralisiert und einer biologischen Nachreinigung in einer Belebtschlammanlage unter Zusatz von Stickstoff- und Phosphatnährsalzen in an sich bekannter Weise unterworfen. Nach 24 Stunden war das Abwasser so weit geklärt, daß es nur noch einen CSB-Wert von 400 mg $O_2$/l und einen unveränderten Chloridgehalt von 1200 mg/l besaß. Es konnte unbedenklich in den Vorfluter eingeleitet werden.

Patentansprüche

1. Verfahren zur Reinigung von bei der Zellstoffherstellung, insbesondere bei der Chlorbleiche von Zellstoff, anfallenden Abwässern, gekennzeichnet durch die Kombination folgender Verfahrensstufen und -maßnahmen:

a) Befreiung des Abwassers von Feststoffteilchen in einer vorgeschalteten, mechanischen Reinigungsstufe,

b) Einführen des vorgereinigten Abwassers in eine Elektrolyseanlage, in der das Abwasser unter ständiger Bewegung einer anodischen Oxydationsbehandlung unterworfen wird, wobei eine elektrische Potentialdifferenz zwischen den Elektroden angelegt und der pH-Wert des Abwassers auf ungefähr 1 bis 6,5 in geeigneter Weise eingestellt und aufrechterhalten wird,

c) Überführen des so behandelten Abwassers aus Stufe b)
in eine Flockungszone, in der unter ständiger Bewegung zu dem Abwasser eine wässrige Lösung eines
stark kationischen Polyelektrolyten bei Raumtemperatur zugefügt und der pH-Wert auf 1 bis 6,5 eingestellt und aufrechterhalten wird, wobei eine
Ausflockung von Kolloiden und suspendierten Inhaltsstoffen erfolgt,

d) Überführen des so behandelten Abwassers zusammen
mit den ausgeflockten Produkten aus Stufe c) in
eine weitere Zone, in der die ausgeflockten Produkte
abgetrennt werden,

e) Neutralisieren des von den ausgeflockten Produkten befreiten Abwassers und

f) Überführen des neutralisierten Abwassers in eine
Belebtschlammanlage, in der durch geeignete Mikroorganismen unter Beifügung von Zusatznährstoffen
ein biologischer Abbau der noch im Abwasser vorhandenen organischen Produkte erfolgt, worauf das
so geklärte Abwasser in einen Vorfluter abgeleitet
wird.

2. Verfahren nach Anspruch 1, dadurch gekennzeichnet,
daß die anodische Oxidation mit Hilfe von Plattenelektroden aus einem gegenüber Halogenen und Halogeniden
widerstandsfähigen Material durchgeführt wird.

3. Verfahren nach Anspruch 2, dadurch gekennzeichnet,
daß aus austenitischem Stahl, aus Titan oder aus Titanlegierungen bestehende Plattenelektroden eingesetzt
werden.

4. Verfahren nach Anspruch 2, dadurch gekennzeichnet, daß aus Kohlenstoff bestehende Plattenelektroden eingesetzt werden.

5. Verfahren nach einem der Ansprüche 1 bis 4, dadurch gekennzeichnet, daß die anodische Oxydation mit einer Gleichstromquelle von etwa 3 bis 24 V und 15 bis 50 A betrieben wird.

6. Verfahren nach einem der Ansprüche 1 bis 5, dadurch gekennzeichnet, daß während der anodischen Oxydation der pH-Wert des Abwassers im Bereich von 1,5 bis 4 gehalten wird.

7. Verfahren nach einem der Ansprüche 1 bis 6, dadurch gekennzeichnet, daß in der Ausflockungszone als stark kationischer Polyelektrolyt ein wasserlösliches Polyethylenimin eingesetzt wird.

8. Verfahren nach Anspruch 7, dadurch gekennzeichnet, daß eine 0,1 bis 0,2 gew.%ige wässrige Polyethyleniminlösung eingesetzt wird.

9. Verfahren nach einem der Ansprüche 1 bis 8, dadurch gekennzeichnet, daß das während der anodischen Oxydation freigesetzte Chlor zurückgewonnen und in den Bleichprozeß zurückgeführt wird.